# EUROPÄISCHE PATENTANMELDUNG

(11) **EP 0 796 874 A2**
(43) Veröffentlichungstag der Anmeldung: **24.09.1997**
(21) Anmeldenummer: 97104515.8
(22) Anmeldetag: 17.03.1997
(51) Int. Cl.: C08F 8/06

(54) **Verfahren zur Herstellung von Peroxycarboxylgruppen enthaltenden Polymerisaten**

(30) Priorität: 19.03.1996 DE 19610817
(71) Anmelder: BASF AKTIENGESELLSCHAFT, 67056 Ludwigshafen (DE)
(72) Erfinder: Tropsch, Jürgen, Dr., 67354 Römerberg (DE); Breitenbach, Jörg, Dr., 68199 Mannheim (DE)
(74) Vertreter: Isenbruck, Günter, Dr.

(57) **Zusammenfassung**

Die Erfindung betrifft ein Verfahren zur Herstellung von Peroxycarboxylgruppen enthaltenden Polymerisaten, wobei man eine Suspension eines monoolefinisch ungesättigte Dicarbonsäureanhydridgruppen-Grundbausteine enthaltenden Polymerisats in einem inerten Verdünnungsmittel mit Wasserstoffperoxid versetzt.

## Beschreibung

Die vorliegende Erfindung betrifft ein Verfahren zur Herstellung von Peroxycarboxylgruppen enthaltenden Polymerisaten, geeignete einsetzbare Polymerisate und Verfahrensprodukte, sowie deren Verwendung.

Aus der DD-A-252 378 ist ein Verfahren zur Herstellung von unvernetzten Polymerpercarboxylaten beschrieben, wobei Malein- und/oder Fumarsäure enthaltende, unvernetzte Polymere in einem inerten, schwer oxidierbaren Lösungsmittel gelöst werden, sodann Wasserstoffperoxid zugesetzt wird und das Produkt unter vermindertem Druck bei Temperaturen kleiner 100°C als festes Produkt gewonnen wird. Im beschriebenen Verfahren beträgt das Verhältnis zwischen Maleinsäurecopolymergrundeinheiten und Wasserstoffperoxid vorzugsweise 1:2 bis 1:4. Um Ausbeuten an Percarboxylat zu COOH von 60% und mehr zu erhalten, muß das Verhältnis von Maleinsäureeinheiten zu Wasserstoffperoxid 1:2 oder mehr betragen. Eingesetzt werden teilhydrolysierte bzw. hydrolysierte Maleinsäurecopolymere.

In der DD-A-272 654 ist ein Verfahren zur Herstellung von copolymeren Peroxydicarbonsäuren und deren Salzen beschrieben, wobei copolymere Dicarbonsäureanhydride mit Wasserstoffperoxid in Abwesenheit von Lösungsmitteln und Katalysatoren in heterogener Phase umgesetzt werden. Erreicht werden Aktivsauerstoffgehalte von 3,1 bis 5,8%.

Eine Aufgabe der vorliegenden Erfindung ist die Bereitstellung eines Verfahrens zur Herstellung von Peroxycarboxylgruppen enthaltenden Polymerisaten durch Umsetzung von monoolefinisch ungesättigten Dicarbonsäureanhydrid-Grundbausteine enthaltenden Polymerisaten mit Wasserstoffperoxid, wobei mit einer geringen Menge an Wasserstoffperoxid ein hoher Anteil an Peroxycarboxylgruppen erzeugt werden kann.

Eine weitere Aufgabe der vorliegenden Erfindung ist die Bereitstellung eines wie vorstehend beschriebenen Verfahrens, wobei das Produkt einfach isoliert werden kann.

Eine weitere Aufgabe der Erfindung ist die Bereitstellung eines wie vorstehend beschriebenen Verfahrens, in dem sich der Gehalt an Peroxycarboxylgruppen im Produkt einfach steuern läßt.

Eine weitere Aufgabe der Erfindung ist die Bereitstellung eines Verfahrens zur Herstellung vernetzter oder teilvernetzter Peroxycarboxylgruppen enthaltender Polymerisate.

Eine weitere Aufgabe der Erfindung ist die Bereitstellung von neuen Peroxycarboxylgruppen enthaltenden Polymerisaten.

Eine weitere Aufgabe der Erfindung ist die Bereitstellung von neuen monoolefinisch ungesättigte Dicarbonsäureanhydrid-Grundbausteine enthaltenden Polymerisaten, die zu Peroxycarboxylgruppen enthaltenden Polymerisaten umgesetzt werden können.

Diese Aufgaben werden erfindungsgemäß gelöst durch ein Verfahren zur Herstellung von Peroxycarboxylgruppen enthaltenden Polymerisaten, wobei man eine Suspension eines monoolefinisch ungesättigte Dicarbonsäureanhydridgruppen-Grundbausteine enthaltenden Polymerisats in einem inerten Verdünnungsmittel mit Wasserstoffperoxid versetzt sowie ein Copolymerisat, umfassend mindestens ein monoolefinisch ungesättigtes Dicarbonsäureanhydrid und mindestens ein N-Vinyllactam als Grundbausteine.

Im erfindungsgemäßen Verfahren werden die monoolefinisch ungesättigte Dicarbonsäureanhydrid-Grundbausteine enthaltenden Polymerisate in einem inerten Lösungsmittel suspendiert und mit einer gewünschten Menge an Wasserstoffperoxid gemäß einer erfindungsgemäßen Ausführungsform in einer zwei-Phasen-Reaktion umgesetzt. Dabei läßt sich der Gehalt an Peroxycarboxylgruppen in den Polymerisaten einfach über die Menge des zugesetzten Wasserstoffperoxids steuern.

Das erfindungsgemäß verwendete monoolefinisch ungesättigte Dicarbonsäureanhydrid-Grundbausteine enthaltende Polymerisat kann vorzugsweise ein Homopolymerisat, Copolymerisat, Terpolymerisat, Pfropfcopolymerisat oder Blockcopolymerisat oder ein anderes Polymerisat sein.

Das erfindungsgemäß verwendete Polymerisat kann ein Copolymerisat sein aus mindestens einem monoolefinisch ungesättigten Dicarbonsäureanhydrid-Grundbaustein und mindestens einem monoethylenisch ungesättigten Comonomerengrundbaustein.

### Monoolefinisch ungesättigte Dicarbonsäureanhydrid-Grundbausteine

Monoolefinisch ungesättigte Dicarbonsäureanhydrid-Grundbausteine können beispielsweise cyclische Dicarbonsäureanhydride sein, die in der Ringstruktur eine monoolefinische Unsättigung aufweisen. Beispiele solcher Dicarbonsäureanhydride sind Maleinsäure-, Citraconsäure- und Glutaconsäureanhydride.

Diese Anhydride können ggf. substituiert sein durch einen oder mehrere C₁-C₂₀-Alkylreste, vorzugsweise C₁-C₁₀-Alkylreste, insbesondere C₁-C₅-Alkylreste, oder durch aromatische Reste wie Phenyl- oder Naphthylreste. Die ringförmigen Dicarbonsäureanhydride, wie auch die Alkyl- oder Arylsubstituenten können wahlweise mit geeigneten inerten Substituenten substituiert sein, wie beispielsweise Halogenatomen.

Die verwendbaren Dicarbonsäureanhydride können die monoolefinische Unsättigung auch außerhalb der cyclischen Anhydridstruktur aufweisen, beispielsweise durch einen anhängenden Olefinrest. Beispiele sind Methylenmalonsäureanhydrid, Itaconsäureanhydrid, 1,2,3,6-Tetrahydrophthalsäureanhydrid, 3-Methyl-1,2,6-tetrahydrophthalsäureanhydrid, 2-Methyl-1,2,6-tetrahydrophthalsäureanhydrid, 3,6-Epoxy-1,2,3,6-tetrahydrophthalsäureanhydrid, 5-Norbornen-2,3-dicarbonsäureanhydrid,Bicyclo[2.2.2]-5-octen-2,3-dicarbonsäureanhydrid.

Bevorzugt wird Maleinsäureanhydrid verwendet.

### Monoethylenisch ungesättigte Comonomergrundbausteine

Als monoethylenisch ungesättigte Comonomergrundbausteine können alle geeigneten Grundbausteine verwendet werden. Geeignete Grundbausteine sind beispielsweise N-Vinyllactame, vorzugsweise N-Vinylpyrrolidon, N-Vinylpiperidon, N-Vinylcaprolactam, die substituiert sein können durch einen oder mehrere wie vorstehend bei den Dicarbonsäureanhydriden beschriebene Substituenten. Besonders bevorzugt werden N-Vinylpyrrolidon und/oder N-Vinylcaprolactam eingesetzt, insbesondere in Kombination mit Maleinsäureanhydrid als monoolefinisch ungesättigtem Dicarbonsäureanhydrid-Grundbaustein.

Eine weitere Gruppe geeigneter monoethylenisch ungesättigter Comonomere sind die N-Vinylamide, wie N-Vinylformamid oder N-Vinylacetamid.

Weiterhin verwendbar sind Vinylether, beispielsweise C₁-C₂₀-Alkylvinylether, vorzugsweise C₁-C₁₀-Alkylvinylether, besonderes bevorzugt C₁-C₄-Alkylvinylether, beispielsweise Methyl-, Ethyl-, n-Propyl-, i-Propyl-, n- Butyl, i-Butyl-, Octyl-, Cyclohexyl-, 2-Ethylhexyl-, Dodecyl-, Octadecylvinylether.

Weiterhin verwendbar sind Vinylester, beispielsweise Vinylformiat, Vinylacetat, Vinylpropionat.

Zudem können vinylaromatische Verbindungen eingesetzt werden, wie Styrol und α-Methylstyrol.

Ebenfalls verwendbar sind Acryl- und Methacrylsäure, wie auch Acrylester und Methacrylester, sowie Acrylamide und Methacrylamide. Beispiele hierfür sind Methylacrylat, Ethylacrylat, Propylacrylat, i-Propylacrylat, Butylacrylat, i-Butylacrylat, t-Butylacrylat, Pentylacrylat, Hexylacrylat, 2-Ethylhexylacrylat, Octylacrylat, Laurylacrylat, Stearylacrylat und die entsprechenden Methacrylate, mono- und disubstituierte Acrylamide und Methacrylamide, wie N-Methylacrylamid, N-Ethylacrylamid, N-Propylacrylamid, N-i-Propylacrylamid, N-t-Butylacrylamid, N-Butylacrylamid, N-Hexylacrylamid, N-Octylacrylamid, N,N-Dimethylacrylamid, N,N-Diethylacrylamid und die entsprechenden Methacrylamide.

Eine weitere Gruppe geeigneter Comonomere sind die vorstehend beschriebenen monoolefinisch ungesättigten Dicarbonsäureanhydride.

Weiterhin verwendbar sind Olefine, wie C₂-C₃₀-Olefine, beispielsweise Ethen, Propen, Isobuten, 1-Buten, 1-Penten, 1-Hexen, 1-Octen, 1-Decen, 1-Dodecen, 1-Tetradecen, 1-Hexadecen, 1-Octadecen sowie handelsübliche Mischungen höherer Olefine, wie C₁₂/C₁₄-Olefine, C₁₂/C₁₆-Olefine, C₂₀/C₂₄-Olefine, C₂₄/C₂₈-Olefine.

Besonders bevorzugte monoethylenisch ungesättigte Comonomergrundbausteine sind N-Vinylpyrrolidon, C₁-C₄-Vinylether und C₂-C₈-Olefine.

Die (Co)Monomere können einzeln oder im Gemisch eingesetzt werden.

Das Mol-Verhältnis von ungesättigten Dicarbonsäureanhydrid-Grundbausteinen zu monoethylenisch ungesättigten Comonomergrundbausteinen kann beliebig gewählt werden, je nach gewünschtem Polymerisat. Vorzugsweise beträgt das Verhältnis 20:1 bis 1:20, besonders bevorzugt 10:1 bis 1:10, insbesondere 5:1 bis 1:5.

Gemäß einer Ausführungsform der Erfindung, bei der N-Vinyllactam-Grundbausteine verwendet werden, beträgt das Mol-Verhältnis von monoolefinisch ungesättigten Dicarbonsäureanhydrid-Grundbausteinen zu N-Vinyllactam-Grundbausteinen 20:1 bis 1: 20, vorzugsweise 5:1 bis 1:5, insbesondere 2:1 bis 1:2.

Bei diesen Copolymerisaten sind gemäß einer Ausführungsform der Erfindung 1 bis 95%, vorzugsweise 30 bis 95%, der monoolefinisch ungesättigten Dicarbonsäureanhydrid-Grundbausteine umgesetzt zu monoolefinisch ungesättigten Monoperoxybicarbonsäure-Grundbausteinen.

### Vernetzer

Die erfindungsgemäß eingesetzten Polymerisate können gemäß einer Ausführungsform der Erfindung teilweise oder vollständig vernetzt sein. Als Vernetzer können beliebige geeignete Vernetzer eingesetzt werden. Beispiele geeigneter Vernetzer sind:
- Alkyldiene, z.B. α,ω-Alkyldiene wie 1,9-Decadien
- Divinylalkylether, z.B. Butandiol-1,4-divinylether, Hexandiol-1,6-divinylether, Octandiol-1,8-divinylether
- Di(meth)acrylate von Diolen, z.B. Ethylenglykoldi(meth)acrylat, 1,2-Propylenglykoldi(meth)acrylat, Butandiol-1,4-di(meth)acrylat, Hexandiol-1,6-di(meth)acrylat, Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat, Polyethylenglykoldi(meth)acrylat
- Tri(meth)acrylate von mehrwertigen Alkoholen, z.B. Trimethylolpropantri(meth)acrylat
- Allylester, z.B. Allyl(meth)acrylat
- Allylether mehrwertiger Alkohole, z.B. Pentaerithrittriallylether
- N,N'-Divinylalkylenharnstoffe, z.B. Divinylethylenharnstoff, Divinylpropylenharnstoff
- Methylenbis(meth)acrylamid
- Divinylbenzol.

Die erfindungsgemäß verwendeten Polymerisate können auch nachträglich teilvernetzt werden. Dazu können die Polymerisate vor oder bei der Umsetzung mit Wasserstoffperoxid mit Diolen und/oder Diaminen als Vernetzern umgesetzt werden. Beispiele von als Vernetzer geeigneten Diolen sind Ethandiol, 1,2-Propandiol, 1,3-Propandiol, 1,2-Butandiol, 1,4-Butandiol, 1,5-Pentandiol, 1,2-Pentandiol, 1,3-Hexandiol, 1,6-Hexandiol. Beispiele für verwendbare Diamine sind Ethandiamin, 1,2-Propandiamin, 1,3-Propandiamin, 1,2-Butandiamin, 1,4-Butandiamin, 1,5-Pentandiamin, 1,2-Pentandiamin, 1,2-Hexandiamin, 1,6-Hexandiamin.

Die Vernetzer können in geeigneten Mengen eingesetzt werden, je nach gewünschtem Vernetzungsgrad. Gewöhnlich werden nur geringe Mengen von Vernetzer eingesetzt, beispielsweise 0,001 bis 10, vorzugsweise 0,01 bis 5 Gew.-%, bezogen auf die Gesamtheit der anderen Grundbausteine.

Die erfindungsgemäßen Copolymerisate, die mindestens einen monoolefinisch ungesättigten Dicarbonsäureanhydrid-Grundbaustein, vorzugsweise Maleisssäureanhydrid-Grundbaustein, und mindestens einen N-Vinyllactam-Grundbaustein, vorzugsweise N-Vinylpyrrolidon und/oder N-Vinylcaprolactam-Grundbaustein, umfassen, sind gemäß einer Ausführungsform der Erfindung zumindest teilweise vernetzt über Divinylbenzol und/oder Divinylethylenharnstoff und/oder Alkyldiene und/oder Divinylalkylether und/oder Diole und/oder Diamine. Gemaß einer bevorzugten Ausführungsform der Erfindung sind die erfindungsgemäßen Copolymerisate hergestellt nach dem nachstehend beschriebenen Verfahren.

Bevorzugt werden als Vernetzergrundbausteine Divinylbenzol, Divinylethylenharnstoff, Alkyldiene oder Divinylalzylether eingesetzt. Vorzugsweise sind letztere ausgewählt aus α-ω-Alkyldienen, vorzugsweise 1,9-Decadien oder Butandiol-1,4-divinylether, Hexandiol-1,6-divinylether, Hexandiol-1,6-divinylether oder Octandiol-1,8-divinylether.

Die erfindungsgemäß eingesetzten Polymerisate können ein beliebiges geeignetes Molekulargewicht aufweisen, vorzugsweise ein Zahlenmittel des Molekulargewichts von 1.000 bis 5.000.000, vorzugsweise 2.000 bis 1.000.000.

### Verdünnungsmittel

Die zur Herstellung der erfindungsgemäßen Peroxycarboxylgruppen enthaltenden Polymerisate verwendeten Polymere oder Copolymere werden gemäß einer Ausführungsform der Erfindung in einem Verdünnungsmittel suspendiert, das sowohl das Ausgangspolymerisat wie auch das Produkt nicht löst. Als Verdünnungsmittel können somit alle Verdünngsmittel verwendet werden, die sowohl das Ausgangspolymer wie auch das Produkt nicht lösen. Zudem sollte das Verdünnungsmittel vorzugsweise inert sein, d.h. keine wesentliche Reaktion mit Wasserstoffperoxid zeigen. Als Verdünnungsmittel sind beispielsweise aromatische Verbindungen verwendbar, wie Benzol, Toluol, o-Xylol, m-Xylol, p-Xylol, wie auch Carbonsäureester, beispielsweise Essigsäuremethylester, Essigsäureethylester, Essigsäureisopropylester, Essigsäurebutylester, Essigsäureamylester, Alkane, wie Hexan, Heptan, Octan, Nonan, Decan oder deren Isomere oder Gemische von Alkanen. Andere geeignete Verdünngsmittel sind dem Fachmann bekannt.

Vorzugsweise ist das inerte Verdünnungsmittel ein nicht oder wenig mit Wasser mischbares Verdünnungsmittel.

Bevorzugt wird Essigsäurethylester oder ein Alkan, wie Hexan oder Heptan verwendet.

Die Reaktionsprodukte können aus dem Verdünnungsmittel in einfacher Weise isoliert werden, beispielsweise durch Filtration oder durch Dekantieren. Sodann können die erhaltenen Produkte unter vermindertem Druck bei geeigneten Temperaturen, beispielsweise bis 50°C, getrocknet werden.

### Herstellungsverfahren

Gemäß einer Ausführungsform der Erfindung werden das oder die Ausgangspolymerisat(e) in einem geeigneten inerten Verdünnungsmittel suspendiert und bei einer Temperatur im Bereich von 0° bis 70°C, vorzugsweise 20° bis 55°C, mit einer gewünschten Menge von Wasserstoffperoxid, bevorzugt wäßrigem Wasserstoffperoxid, versetzt. Über das Verhältnis an Wasserstoffperoxid zu Dicarbonsäureanhydrid-Grundbausteinen im Polymerisat kann beeinflußt werden, wie groß der Gehalt an Peroxycarboxylgruppen im Produkpolymerisat ist. Gemäß einer Ausführungsform der Erfindung beträgt die Menge an eingesetztem Wasserstoffperoxid 0,01 bis 1,5, vorzugsweise 0,1 bis 1,5, insbesondere 0,3 bis 1,5 Mol Wasserstoffperoxid pro Mol Dicarbonsäureanhydrid im Ausgangspolymerisat.

Die Umsetzungsdauer kann je nach gewünschtem Gehalt an Peroxycarboxylgruppen im Produkt und nach der Umsetzungstemperatur eingestellt werden. Vorzugsweise beträgt die Umsetzungsdauer 0,1 bis 8 Stunden, besonders bevorzugt 0,5 bis 6 Stunden.

Die als Ausgangsstoffe verwendeten Polymerisate können als fertige Feststoffe eingesetzt werden, die im Verdünnungsmittel suspendiert werden. Gemäß einer Ausführungsform der Erfindung können die Ausgangspolymerisate über eine Suspensionspolymerisation oder Fällungspolymerisation hergestellt werden und ohne vorherige Isolierung mit Wasserstoffperoxid und gegebenenfalls Diolen und/oder Diaminen weiter umgesetzt werden. Vorzugsweise wird für die Polymerisation ein Verdünnungsmittel verwendet, das bei der anschließenden Umsetzung mit Wasserstoffperoxid ein geeignetes Verdünnungsmittel ist. Diese Reaktionsführung ermöglicht eine sehr einfache Herstellung von Peroxycarboxylgruppen enthaltenden Polymerisaten.

Vorzugsweise wird das Wasserstoffperoxid als eine wäßrige Lösung eingesetzt, die einen Gehalt an Wasserstoffperoxid von 10 bis 100 Gew.-%, vorzugsweise 30 bis 60 Gew.-% aufweist.

Die aus der Umsetzung mit Wasserstoffperoxid erhaltenen Peroxycarboxylgruppen enthaltenden Polymerisate können weiterhin gemaß einer Ausführungsform der Erfindung vor der Gewinnung aus dem Reaktionsgemisch zu ihren Alkali- oder Erdalkalisalzen umgesetzt werden. Dies erfolgt vorzugsweise durch Versetzen mit wäßrigern Alkali- oder Erdalkalihydroxiden, - hydrogencarbonaten oder -carbonaten.

Das Peroxycarboxylgruppen enthaltende Polymerisat kann durch Filtration oder Dekantieren aus dem Reaktionsgemisch gewonnen werden.

Die erfindungsgemäß hergestellten Produkte enthalten je nach eingesetzter Menge an Wasserstoffperoxid 1 bis 95% an Monoperoxycarboxylgruppen, bezogen auf die Gesamtmenge an Dicarbonsäureanhydridgruppen im Ausgangspolymerisat. Gemäß einer Ausführungsform der Erfindung werden diese hohen Gehalte an Monoperoxycarboxylgruppen auch bei der Verwendung von wasserhaltiger Wasserstoffperoxidlösung erhalten. Überraschenderweise wird auch bei wäßriger Wasserstoffperoxidlösung vorrangig Wasserstoffperoxid in das Polymerisat eingebaut im Vergleich zu Wasser.

Die gebundene Menge an Aktivsauerstoff kann beispielsweise bestimmt werden durch iodometrische Titration.

Die erfindungsgemäß hergestellten Peroxycarboxylgruppen enthaltenden Polymerisate können in einem weiten Bereich von Anwendungen Verwendung finden, beispielsweise als Bleichmittel, Desinfektionsmittel, Reinigungsmittel oder zur Epoxydierung. Sowohl Anwendungen im kosmetischen wie auch im pharmazeutischen Bereich sind möglich. Beispiele solcher Anwendungen liegen in den Bereichen: Mittel gegen Akne, Zahnbleiche, bzw. Aufhellung der Zähne, nicht-wäßrige Zahnpasten und Zahnpulver, Reinigung von Zahnprothesen und Zahnspangen, schäumende Mundwaschtabletten, Enthaarungsmittel (oxidierende Depilationsmittel), Haarbleiche, Bleichung der Haut, Kupplungsagens bei der Haarfärbung und Erzeugung von Dauerwellen (alkalische Kaltwelle), Aufweichen von Nagelhaut, beispielsweise in der Fußpflege, Einbau in Tiefenfiltersysteme, gefüllte Tamponaden zur gleichzeitigen Absorption und Desinfektion, desinfizierende Wischtücher, Desinfektionsmittel für medizinische Geräte, Flächendesinfektion, Wasserdesinfektion, Vaginalsuppositorien, nicht-wäßrige Salben, beispielsweise Salben auf Polyethylenbasis, antibakterielle Lippenstifte, Wundverbände, Wundpulver, Kontaktlinsenreinigung, Kaltwaschtabletten. Ebenfalls geeignet sind die erfindungsgemäßen Produkte zum Einsatz in chemischen Umsetzungen, beispielsweise bei der Herstellung von N-Oxiden, Epoxiden, zur Oxidation von Alkoholen und Aldehyden und anderen Verbindungen, zur Anwendung als Initiatoren bei Polymerisationen, wie Lösungs-, Emulsions-, Fällungs- und Suspensionspolymerisationen mit allen bekannten geeigneten Monomeren und Kombinationen hiervon in Homo- und Copolymerisationen, oder zur Vernetzung von Polymeren.

Nachstehend wird die Erfindung anhand von Ausführungsbeispielen erläutert.

In allen Beispielen beträgt das Mol-Verhältnis Vinylpyrrolidon/Maleinsäureanhydrid 1:1.

### Herstellung der Peroxycarboxylgruppen enthaltenden Monomere

### Beispiel 1

In einem 100 ml fassenden Glaskolben, der ausgestattet ist mit einem Rückwerk, werden 10 g eines Copolymeren aus N-Vinylpyrrolidon und Maleinsäureanhydrid vorgelegt und in 50 ml Essigsäureethylester suspendiert. Sodann wird die Suspension mit 0,96 g H₂O₂ (50%ig, entsprechend 30 mol-%, bezogen auf den Maleinsäureanhydridanteil) versetzt. Das Gemisch wird für 4 Stunden bei 25°C gerührt, worauf das Peroxycarboxylgruppen enthaltende Polymerisat durch Filtration isoliert wird. Das Produkt weist einen gebundenen Anteil an H₂O₂ von 2,5% auf (entspricht 54,0% der Theorie).

### Beispiel 2

In einem 100 ml fassenden Glaskolben, der ausgestattet ist mit einem Rührwerk, werden 10 g eines Copolymeren aus N-Vinylpyrrolidon und Maleinsäureanhydrid vorgelegt und in 50 ml Essigsäureethylester suspendiert. Sodann wird die Suspension mit 3,84 g H₂O₂ (50%-ig, entsprechend 120 mol-%, bezogen auf den Maleinsäureanhydridanteil) versetzt. Das Gemisch wird für 2 Stunden bei 0°C gerührt, worauf das Peroxycarboxylgruppen enthaltende Polymerisat durch Filtration isoliert wird. Das Produkt weist einen gebundenen Anteil an H₂O₂ von 7,2% auf (entspricht 51,4% der Theorie).

### Beispiel 3

In einem 250 ml fassenden Glaskolben, der ausgestattet ist mit einem Rührwerk, werden 25 g eines Copolymeren aus N-Vinylpyrrolidon und Maleinsäureanhydrid vorgelegt und in 125 ml Essigsäureethylester suspendiert. Sodann wird die Suspension mit 9,6 g H₂O₂ (50%ig, entsprechend 120 mol-%, bezogen auf den Maleinsäureanhydridanteil) versetzt. Das Gemisch wird für 4 Stunden bei 25°C gerührt, worauf das Peroxycarboxylgruppen enthaltende Polymerisat durch Filtration isoliert wird. Das Produkt weist einen gebundenen Anteil an H₂O₂ von 11,1% auf (entspricht 79,3 % der Theorie).

### Beispiel 4

In einem 100 ml fassenden Glaskolben, der ausgestattet ist mit einem Rührwerk, werden 10 g eines Copolymeren aus N-Vinylpyrrolidon und Maleinsäureanhydrid vorgelegt und in 50 ml Essigsäureethylester suspendiert. Sodann wird die Suspension mit 4,79 g H₂O₂ (50%ig, entsprechend 150 mol-%, bezogen auf den Maleinsäureanhydridanteil) versetzt. Das Gemisch wird für 2 Stunden bei 50°C gerührt, worauf das Peroxycarboxylgruppen enthaltende Polymerisat durch Filtration isoliert wird. Das Produkt weist einen gebundenen Anteil an H₂O₂ von 13,3% auf (entspricht 95% der Theorie).

### Beispiel 5

In einem 100 ml fassenden Glaskolben, der ausgestattet ist mit einem Rührwerk, werden 10 g eines Copolymeren aus N-Vinylpyrrolidon und Maleinsäureanhydrid vorgelegt und in 50 ml Essigsäureethylester suspendiert. Sodann wird die Suspension mit 4,79 g H₂O₂ (50%ig, entsprechend 150 mol-%, bezogen auf den Maleinsäureanhydridanteil) versetzt. Das Gemisch wird für 2 Stunden bei 25°C gerührt, worauf das Peroxycarboxylgruppen enthaltende Polymerisat durch Filtration isoliert wird. Das Produkt weist einen gebundenen Anteil an H₂O₂ von 10,7% auf (entspricht 76,4% der Theorie).

### Beispiel 6

In einem 100 ml fassenden Glaskolben, der ausgestattet ist mit einem Rührwerk, werden 10 g eines Copolymeren aus N-Vinylpyrrolidon und Maleinsäureanhydrid vorgelegt und in 50 ml Heptan suspendiert. Sodann wird die Suspension mit 4,08 g H₂O₂ (50%ig, entsprechend 125 mol-%, bezogen auf den Maleinsäureanhydridanteil) versetzt. Das Gemisch wird für 2 Stunden bei 50°C gerührt, worauf das Peroxycarboxylgruppen enthaltende Polymerisat durch Filtration isoliert wird. Das Produkt weist einen gebundenen Anteil an H₂O₂ von 11,2% auf (entspricht 79,9% der Theorie).

### Beispiel 7

In einem 500 ml fassenden Glaskolben, der ausgestattet ist mit einem Rührwerk, werden 60 g eines Copolymeren aus N-Vinylpyrrolidon und Maleinsäureanhydrid vorgelegt und in 350 ml Essigsäureethylester suspendiert. Sodann wird die Suspension mit 28,74 g H₂O₂ (50%ig, entsprechend 150 mol-%, bezogen auf den Maleinsäureanhydridanteil) versetzt. Das Gemisch wird für 4 Stunden bei 25°C gerührt, worauf das Peroxycarboxylgruppen enthaltende Polymerisat durch Filtration isoliert wird. Das Produkt weist einen gebundenen Anteil an H₂O₂ von 12,45% auf (entspricht 88,9% der Theorie).

### Beispiel 8

In einem 100 ml fassenden Glaskolben, der ausgestattet ist mit einem Rührwerk, werden 10 g eines Copolymeren aus N-Vinylpyrrolidon und Maleinsäureanhydrid vorgelegt und in 50 ml Heptan suspendiert. Sodann wird die Suspension mit 3,36 g H₂O₂ (50%ig, entsprechend 100 mol-%, bezogen auf den Maleinsäureanhydridanteil) versetzt. Das Gemisch wird für 2 Stunden bei 50°C gerührt, worauf das Peroxycarboxylgruppen enthaltende Polymerisat durch Filtration isoliert wird. Das Produkt weist einen gebundenen Anteil an H₂O₂ von 10,3% auf (entspricht 73,6% der Theorie).

### Beispiel 9

In einem 100 ml fassenden Glaskolben, der ausgestattet ist mit einem Rührwerk, werden 10 g eines Copolymeren aus N-Vinylpyrrolidon und Maleinsäureanhydrid vorgelegt und in 50 ml Hexan suspendiert. Sodann wird die Suspension mit 4,79 g H₂O₂ (50%ig, entsprechend 150 mol-%, bezogen auf den Maleinsäureanhydridanteil) versetzt. Das Gemisch wird für 4 Stunden bei 50°C gerührt, worauf das Peroxycarboxylgruppen enthaltende Polymerisat durch Filtration isoliert wird. Das Produkt weist einen gebundenen Anteil an H₂O₂ von 13,0% auf (entspricht 93,0% der Theorie).

### Beispiel 10

In einem 100 ml fassenden Glaskolben, der ausgestattet ist mit einem Rührwerk, werden 10 g eines Copolymeren aus N-Vinylpyrrolidon und Maleinsäureanhydrid vorgelegt und in 50 ml Essigsäureethylester suspendiert. Sodann wird die Suspension mit 1,6 g H₂O₂ (10%ig, entsprechend 10 mol-%, bezogen auf den Maleinsäureanhydridanteil) versetzt. Das Gemisch wird für 4 Stunden bei 25°C gerührt, worauf das Peroxycarboxylgruppen enthaltende Polymerisat durch Filtration isoliert wird. Das Produkt weist einen gebundenen Anteil an H₂O₂ von 0,8% auf (entspricht 50% der Theorie).

### Beispiel 11

### Zerfallskinetik der Peroxycarboxylgruppen enthaltenden Polymerisate

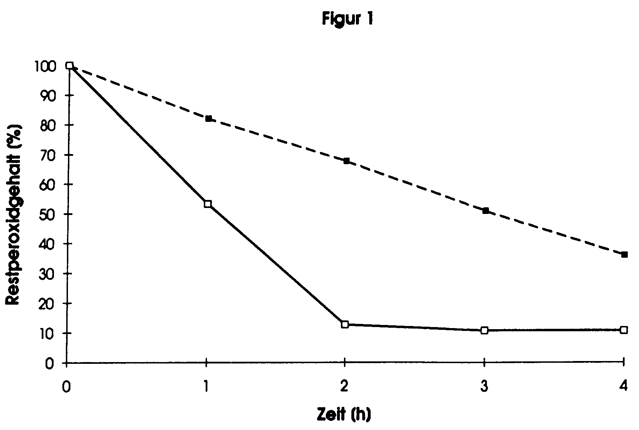

In einem Versuch wurde die Zerfallskinetik des Peroxycarboxylgruppen enthaltenden Polymerisats aus Beispiel 7 mit der Zerfallskinetik von Wasserstoffperoxid unter gleichen Bedingungen verglichen. Die Temperatur betrug 90°C, der pH-Wert 2 und der Ausgangsgehalt an Peroxid betrug 0,2 Gew.-%. Der Peroxidgehalt wurde iodometrisch bestimmt. Die Ergebnisse der Zerfallskinetik sind in der Graphik in Figur 1 wiedergegeben, in der der Restgehalt an Peroxid gegen die Zeit aufgetragen ist. (Durchgezogene Linie: Polymerisat aus Beispiel 7, gestrichelte Linie: technisch stabilisiertes Wasserstoffperoxid). Man erkennt, daß der Peroxidgehalt in dem Polymerisat aus Beispiel 7 wesentlich schneller abnimmt als der einer vergleichbaren Wasserstoffperoxidlösung. Dies zeigt, daß die erfindungsgemäßen Peroxycarboxylgruppen enthaltenden Polymerisate besser geeignet sind als Oxidationsmittel bzw. als Mittel zur Bereitstellung von Aktivsauerstoff.

### Verwendung der Peroxycarboxylgruppen enthaltenden Polymerisate als Initiatoren für Polymerisationen

### Beispiel 12

In einer Rührapparatur mit aufgesetztem Rückflußkühler und Stickstoffspülung werden 28,8 g (0,4 mol) Acrylsäure in 67 g Wasser vorgelegt. Man fügt 1,36 g der polymeren Persäure aus Beispiel 3 hinzu und erhitzt 2 Stunden bei 85°C, danach weitere 2 Stunden bei 95°C. Gegen Ende der Reaktion wird mit 125 ml Wasser verdünnt. Man erhält eine viskose Lösung mit einem Feststoffgehalt von 13%. Der K-Wert* beträgt 30,4.
*Die K-Werte wurden nach Fikentscher, Cellulosechemie, Bd. 13, S. 58-64 (1932) bei 25°C 0,1 gew.-%ig in 0,5 molarer NaCl-Lösung gemessen.

### Beispiel 13

In einer Rührapparatur mit aufgesetztem Rückflußkühler und Stickstoffspülung werden 30 g (0,23 mol) Hydroxypropylacrylat, 60 g (0,09 mol) N,N-Dimethyl-N-ethyl-N-(2-methacryloyloxy)-ethylammonium-ethylsulfat (50%ig in Wasser), 110 g Wasser sowie 1,12 g polymere Persäure aus Beispiel 3 vorgelegt. Man erhitzt 2 Stunden bei 90°C, danach weitere 2 h bei 100°C. Gegen Ende der Reaktion wird mit 100 ml Wasser verdünnt. Man erhält eine viskose Lösung mit einem Festgehalt von 20 % und einem K-Wert* von 51,0.
*Die K-Werte wurden nach Fikentscher, Cellulosechemie, Bd. 13, S. 58-64 (1932) bei 25°C 0,1 gew.-%ig in 0,5 molarer NaCl-Lösung gemessen.

## Patentansprüche

1. Verfahren zur Herstellung von Peroxycarboxylgruppen enthaltenden Polymerisaten, wobei man eine Suspension eines monoolefinisch ungesättigte Dicarbonsäureanhydridgruppen-Grundbausteine enthaltenden Polymerisats in einem inerten Verdünngsmittel mit Wasserstoffperoxid versetzt.

2. Verfahren ach Anspruch 1, wobei das monoolefinisch ungesättigte Dicarbonsäureanhydrid-Grundbausteine enthaltende Polymerisat ein Copolymerisat aus mindestens einem monoolefinisch ungesättigten Dicarbonsäureanhydrid-Grundbaustein und mindestens einem monoethylenisch ungesättigten Comonomergrundbaustein ist.

3. Verfahren nach Anspruch 1 oder 2, wobei der monoolefinisch ungesättigte Dicarbonsäureanhydrid-Grundbaustein ausgewählt ist aus Maleinsäure-, Itaconsäure-, Citraconsäure-, Glutaconsäure-, Methylenmalonsäureanhydrid und deren Gemischen, vorzugsweise Maleinsäureanhydrid.

4. Verfahren nach Anspruch 2 oder 3, wobei der monoethylenisch ungesättigte Comonomergrundbaustein ausgewählt ist aus N-Vinyllactamen, vorzugsweise N-Vinylpyrrolidon, N-Vinylpiperidon oder N-Vinylcaprolactam, Vinylethern, vorzugsweise C₁-C₂₀-Alkylvinylethern, vorzugsweise Methyl-, Ethyl-, n-Propyl-, i-Propyl-, n-Butyl-, i-Butyl-, Octyl-, Cyclohexyl-, 2-Ethylhexyl-, oder Octadecylvinylether, Olefinen, vorzugsweise C₂-C₃₀-Olefinen, vorzugsweise Ethen, Propen, Isobuten, 1-Buten, 1-Penten, 1-Hexen, 1-Octen, 1-Decen, 1-Dodecen, 1-Tetradecen, 1-Hexadecen, 1-Octadecen oder Mischungen von C₈₋₃₀-Olefinen, vorzugsweise C₁₂/C₁₄-Olefinen, C₁₂/C₁₆-Olefinen, C₂₀/C₂₄-Olefinen oder C₂₄/C₂₈-Olefinen, vinylaromatischen Verbindungen, vorzugsweise Styrol oder α-Methylstyrol, Vinylestern, vorzugsweise Vinylformiat, Vinylacetat, oder Vinylpropionat, N-Vinylamiden, vorzugsweise N-Vinylformamid, N-Vinylacetamid, Acrylsäure, Methacrylsäure, (Meth)acrylestern, vorzugsweise Methylacrylat, Methylacrylat, Propylacrylat, i-Propylacrylat, Butylacrylat, i-Butylacrylat, t-Butylacrylat, Pentylacrylat, Hexylacrylat, 2-Ethylhexylacrylat, Ocrylacrylat, Laurylacrylat, Stearylacrylat und entsprechenden Methacrylaten, Acrylamid, Methacrylamid, Mono- und disubstituierten (Meth)acrylamiden, vorzugsweise N-Methylacrylamid, N-Ethylacrylamid, N-Propylacrylamid, N-i-Propylacrylamid, N-t-Butylacrylamid, N-Butylacrylamid, N-Hexylacrylamid, N-Octylacrylamid, N,N-Dimethylacrylamid, N,N-Diethylacrylamid und den entsprechenden Methacrylamiden oder ungesättigten Dicarbonsäureanhydriden.

5. Verfahren nach einem der Ansprüche 1 bis 4, wobei das eingesetzte Polymerisat zusätzlich Vernetzergrundbausteine enthält, vorzugsweise Divinylbenzol, Divinylethylenharnstoff, Alkyldiene oder Divinylalkylether, wobei der Vernetzergrundbaustein insbesondere ausgewählt ist aus α-ω-Alkyldienen, vorzugsweise 1,9-Decadien, oder Butandiol-1,4-divinylether, Hexandiol-1,6-divinylether, Hexandiol-1,6-divinylether oder Octandiol-1,8-divinylether.

6. Verfahren nach Anspruch 1 bis 5, wobei die eingesetzten Polymerisate vor oder während der Umsetzung mit Wasserstoffperoxid mit mindestens einem Diol und/oder mindestens einem Diamin umgesetzt werden, wobei das Diol vorzugsweise ausgewählt ist aus Ethandiol, 1,2-Propandiol, 1,3-Propandiol, 1,2-Butandiol, 1,4-Butandiol, 1,5-Pentandiol, 1,2-Pentandiol, 1,2-Hexandiol, 1,6-Hexandiol und das Diamin ausgewählt ist aus Ethandiamin, 1,2-Propandiamin, 1,3-Propandiamin, 1,2-Butandiamin, 1,4-Butandiamin, 1,5-Pentandiamin, 1,2-Pentandiamin, 1,2-Hexandiamin, 1,6-Hexandiamin.

7. Copolymerisat, umfassend mindestens ein monoolefinisch ungesättigtes Dicarbonsäureanhydrid und mindestens ein N-Vinyllactam als Grundbausteine.

8. Copolymerisat nach Anspruch 7 mit einem oder mehreren der nachstehenden Merkmale:
- der monoolefinisch ungesättigte Dicarbonsäureanhydrid-Grundbaustein ist Maleinsäureanhydrid und der N-Vinyllactam-Grundbaustein ist N-Vinylpyrrolidon und/oder N-Vinylcaprolactam;
- das Mol-Verhältnis von monoolefinisch ungesättigtem Dicarbonsäureanhydrid-Grundbausteinen zu N-Vinyllactam-Grundbausteinen beträgt 20:1 bis 1:20, vorzugsweise 5:1 bis 1:5, insbesondere 2:1 bis 1:2;
1 bis 95%, vorzugsweise 30 bis 95%, der monoolefinisch ungesättigten Dicarbonsäureanhydrid-Grundbausteine sind umgesetzt zu monoolefinisch ungesättigten Monoperoxybicarbonsäure-Grundbausteinen;
- es ist zumindest teilweise vernetzt über Divinylbenzol und/oder Divinylethylerharnstoff und/oder Alkyldiene und/oder Divinylalkylether und/oder Diole und/oder Diamine.

9. Verwendung der in einem der Ansprüche 1 bis 8 definierten Peroxycarboxylgruppen enthaltenden Polymerisate als Bleichmittel, Desinfektionsmittel, Reinigungsmittel, Initiatoren bei Polymerisationen oder zur Epoxidierung.
